# EUROPEAN PATENT SPECIFICATION

(11) **EP 2 424 758 B1**
(45) Date of publication and mention of the grant of the patent: **08.05.2013**
(21) Application number: 10709693.5
(22) Date of filing: 15.03.2010
(51) Int. Cl.: B60W 30/188, B60W 10/06, B60W 10/184

(54) **VEHICLE CONTROL SYSTEM**
FAHRZEUGSTEUERUNGSSYSTEM
SYSTÈME DE COMMANDE DE VÉHICULE

(30) Priority: 30.04.2009 GB 0907441
(43) Date of publication of application: 07.03.2012
(73) Proprietor: Agco SA, 60026 Beauvais (FR)
(72) Inventor: PIROTAIS, Jacques, F-60650 Glatigny (FR)
(74) Representative: Marden, David Ian
(86) International application number: PCT/EP2010/001611
(87) International publication number: WO 2010/124764

(56) References cited:
- EP-A2- 2 025 974
- JP-A- 10 264 788
- US-A1- 2005 124 458

## Description

The invention relates to a control system for a vehicle having electronic gear shift and an engine overspeed prevention mode which prevents downshift in the transmission ratio when the engine speed exceeds a predetermined threshold. In particular, but not exclusively so, the invention relates to vehicles which can tow trailers.

When towing heavy loads it is known driving practise to exploit the available engine braking, especially when descending inclines, by downshifting the transmission ratio to a lower gear. This reduces the reliance on the brakes to retard the motion of the vehicle and trailer combination. Modem vehicles, both passenger and utility, are often fitted with electronic gear shift which makes such downshifting of transmission ratio less cumbersome and often without needing to depress a clutch pedal. The 6400 range of agricultural tractors branded Massey Ferguson (registered trade mark) and manufactured and marketed by the applicant are an example of such vehicle.

To prevent damage to the engine caused by downshifting to a low transmission ratio resulting in overspeed of the engine, means are provided to prevent such downshifting when the engine speed exceeds a predetermined threshold. However, such restriction on downshifting limits a driver's ability to use engine braking when towing trailers downhill.

EP-2,025,974 discloses a driving assist method for vehicles with automatic transmissions which automatically applies the brake in response to downshift commands in the event that an unacceptable retarding torque would be placed upon the engine otherwise.

It is an object of the invention to provide a control system for a vehicle having improved safety for towing heavy trailers down hills.

In accordance with the invention there is provided a control system for a vehicle having electronic gearshift, the system comprising a multi-ratio transmission arranged to deliver power from an engine to driven wheels of the vehicle at a selected input-to-output ratio, engine speed sensing means and a user-interface device operably connected to a controller to upshift and downshift the selected ratio of the transmission in response to commands from a driver, the system being operable in an engine overspeed prevention mode when the engine speed exceeds a predetermined threshold and in which mode a downshift in ratio is prevented and a wheel of the vehicle, and/or attached vehicle, is braked in response to a downshift command from the driver.

The inventors have exploited the redundancy in a gearshift device when in the overspeed prevention mode. By automatically changing the functionality of the downshift command of the gearshift device the invention advantageously allows the driver to apply the brakes thus retarding the vehicle without having to change his hand position or make a separate movement involving the brake pedals.

The activation of the brakes by the driver's downshift command advantageously retards the vehicle so as to control the engine speed and may even lower the engine speed until it falls below the predetermined threshold. Preferably, the engine overspeed prevention mode is automatically cancelled when the engine speed falls below the predetermined value. Therefore, it is envisaged that a driver can simply negotiate inclines using the maximum available engine braking supplemented with braking the wheels when required using only one interface.

The user interface device is preferably a hand operable control element which is linearly displaceable away from a central position into opposing directions. Advantageously, such a device is ergonomically friendly for the driver wherein such linear displacement away from a central position clearly corresponds to an upshift or downshift command. Preferably the control element is biased towards the central position so that the element returns thereto when the driver's hand is removed.

When in the engine overspeed prevention mode the braking force is preferably proportional to the displacement of the control element away from the central position. Advantageously, this allows the driver to accurately control the applied braking force according to the specific driving conditions faced.

In one preferred embodiment at least one wheel of the vehicle is braked in response to the downshift command from the driver. This braking force may be applied by employing the existing braking system of the vehicle without interfering with the pedal operated means of the applying the brakes. The vehicle brake system may comprise a directional control valve which controls the transmission of pressurised fluid to braking apparatus associated with the braked wheels. In this case the directional control valve is also controlled by the controller preferably using a solenoid which responds to electronic signals from the controller.

Alternatively, the vehicle may comprise a braking system which is separate to that associated with the normal service brakes.

In another preferred embodiment the vehicle comprises an auxiliary brake circuit having a connector for connecting to a trailer brake pipe which conveys pressurised fluid to trailer brake apparatus of an attached trailer. In this case the auxiliary brake circuit is controlled by the controller, using electronic signals for example. It should be appreciated that the system in accordance with the invention may exploit the braking system of the vehicle and/or any trailer brake apparatus of an attached trailer. In addition the activation of the trailer brakes in accordance with the invention the driver is preferably provided with means to manually control the auxiliary brake circuit.

The invention is particularly suited to application in agriculture wherein the vehicle is a tractor which is suitable for hauling heavy trailers, often in excess of 10 tonne. The transmission of the tractor may be either continuously variable or of a power shift type operable at a plurality of discrete ratios.

Further advantages of the invention will become apparent from the following description of specific embodiments with reference to the appended drawings in which:-
- Figure 1: shows a tractor hauling a trailer;
- Figure 2: is a schematic view of a control system in accordance with a first embodiment of the invention;
- Figure 3: is a schematic view of a control system in accordance with a second embodiment of the invention, and
- Figure 4: is a schematic view of a hydraulic circuit employed in the system of Figure 3.

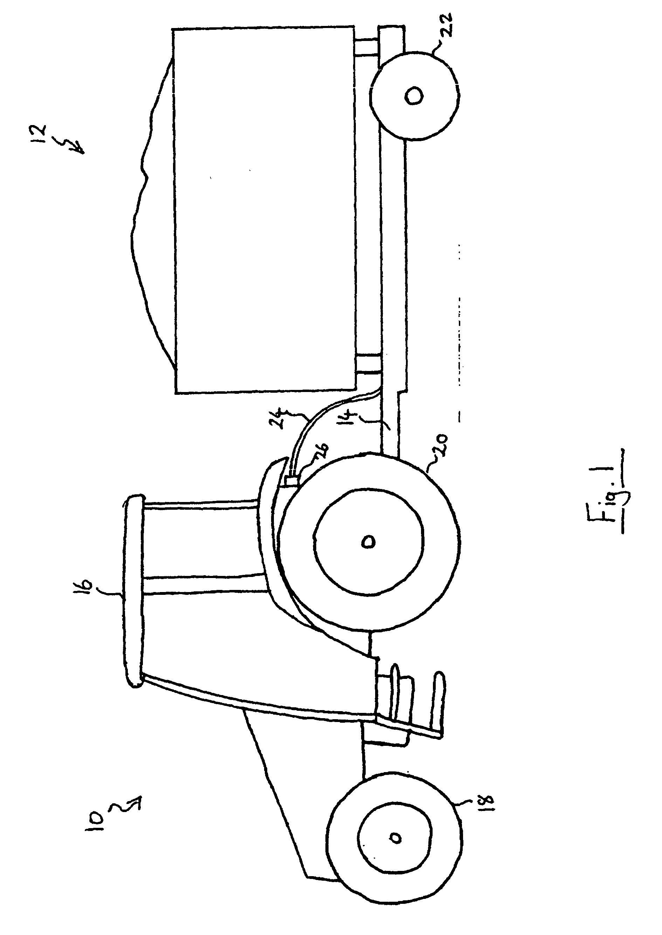

With reference to Figure 1 a tractor 10 is attached to a trailer 12 by means of a drawbar 14. The tractor 10 comprises a driver's cab 16, a pair of front steerable wheels 18 and a pair of rear wheels 20. The trailer 12 comprises a pair of wheels 22.

The rear wheels 20 of the tractor 10 have braking apparatus associated therewith which will be described in more detail below. Furthermore, the trailer 12 includes trailer brake apparatus (not shown) which serve to brake the wheels 22 in response to hydraulic signals sent via hydraulic pipe 24 which is attached to the tractor 10 by connector 26.

The two embodiments described below are both applicable to the tractor and trailer combination shown in Figure 1 although it will be appreciated that other vehicle and trailer set-ups may replace that shown.

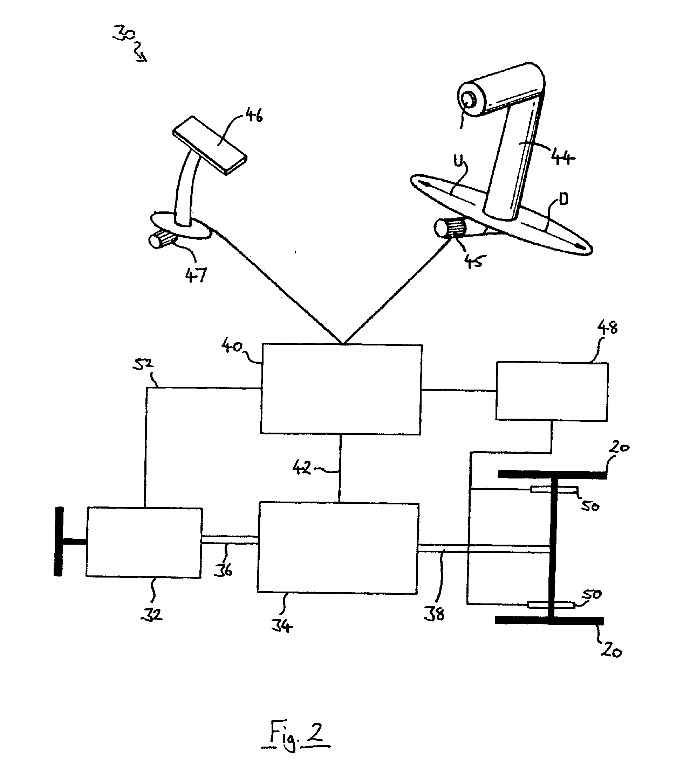

A first embodiment of the invention is shown in Figure 2 in which a control system 30 is installed on the tractor 10 of Figure 1. An engine 32 is drivingly connected to multi-ratio transmission 34 by a drive shaft 36. The output of transmission 34 is drivingly connected to rear wheels 20 via an output shaft 38 and a differential (not shown). The engine 32 is a diesel fuelled internal combustion engine, although the invention is equally applicable to other means of propulsion.

The transmission 34 serves to transmit torque from the input shaft 36 to the output shaft 38 at a ratio selected from a range of available ratios. In this embodiment the transmission 34 is of the powershift type which is operable at one of a plurality of discrete ratios, typically sixteen. However, a continuously variable transmission (CVT) may instead be employed so as to provide a continuous range of input-to-output ratios.

An onboard electronic control unit (ECU) 40 serves to control the transmission 34 via a wired link 42. Electronic signals are sent via the link 42 to control actuators (not shown) within the transmission 34 and change the input-to-output ratio. Such upshift and downshift control signals are sent in response to respective upshift and downshift commands from the driver sent via gearshift lever 44.

Angular sensing means located within shaft 45 sense when lever 44 is moved away from the central position represented in Figure 2. The sensed angle is then transmitted to ECU 40 and interpreted as an upshift or downshift command. Movements of lever 44 in the direction of arrow U correspond to upshift commands whilst movement of lever 44 in the direction of arrow D correspond to downshift commands. The lever 44 is biased by spring means (not shown) which return the lever 44 to the central position in the absence of any applied force from the driver.

Control system 30 further comprises a brake pedal 46 and a sensor 47 to sense depression of the pedal 46. Activity of brake pedal 46 is sent from sensor 47 to ECU 40 in the form of electronic signals. A braking system represented generally at 48 is controlled by electronic signals sent from ECU 40. Therefore, in response to depression of brake pedal 46 by the driver, rear wheels 20 are braked by braking apparatus 50 controlled by electronic signals from the ECU 40 to braking system 48 and by hydraulic signals from braking system 48 to braking apparatus 50.

An engine speed sensor (not shown) measures the speed of rotation of drive shaft 36 and transmits the sensed speed to ECU 40 via wired link 52. As is common in known installations, the engine speed is displayed to the driver on a console (not shown).

The control system 30 includes a mode of operation to prevent overspeed of engine 32 thus reducing the risk of damage thereto. In the event of the sensed engine speed exceeding 2300rpm, any downshift in the transmission 34 is prevented so as to avoid any further increase in the engine speed caused by forcing from the vehicle momentum. Therefore, in the engine overspeed prevention mode, any downshift command received from the driver via lever 44 is not executed by ECU 40 and thus transmission 34 remains in the present selected ratio.

In accordance with the invention, when in the overspeed prevention mode, any downshift command instructed through lever 44 causes the ECU 40 to instruct a brake application via braking system 48 and brake apparatus 50. The sensed angle of lever 44 corresponds to the displacement of lever 44 in the direction of arrow D away from the central position over a range of available displacement. The extent of the displacement away from the central position is communicated to ECU 40 which translates the displacement into an applied braking force using a proportional relationship. Therefore, any movement of lever 44 in the direction of arrow D when operating in the engine overspeed prevention mode causes the brakes 50 to be applied to rear wheels 20 with a force which is proportional to the extent of displacement.

The action of braking the wheels 20 may retard the tractor and trailer combination eventually to an extent which lowers the engine speed resulting in automatic cancellation of the engine overspeed prevention mode. In the event of such cancellation any displacement of lever 44 in the direction of arrow D reverts to controlling downshifts of transmission 34.

In an example situation therefore, a driver negotiating a downwardly inclined road may command downshifts in transmission ratio to exploit the maximum available engine braking to act against the pushing force of trailer 12. When the sensed engine speed reaches or exceeds the predetermined safe threshold, of say 2300rpm, any downshift commands received by ECU 40 are translated into a brake application of rear wheels 20. The proportional relationship between lever displacement and braking force allows the driver to control the degree of braking as the driving conditions require thus keeping the engine speed and vehicle speed under control whilst descending the incline.

The control system 30 advantageously exploits the redundancy in functionality of lever displacement in the direction of arrow D when operating in the engine overspeed prevention mode so as to provide means to allow the driver to apply the brakes without having to move his hand from the lever 44 or make a separate braking action via pedal 46. This improves the ease of driving the tractor and trailer combination down inclined slopes, improving the control of the vehicle and thus safety of the driver and any pedestrians around.

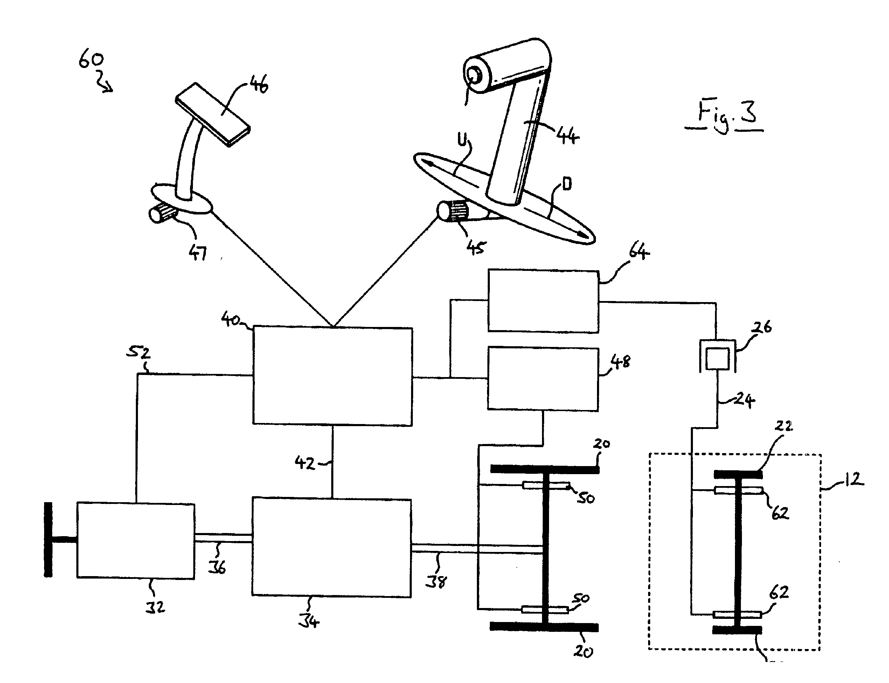

A second embodiment of the invention is illustrated in Figure 3 in which a control system 60 includes all features and functionality of that described above in relation to control system 30. In addition, control system 60 is adapted to control trailer brake apparatus 62 which serve to brake the trailer wheels 22 in response to an applied hydraulic pressure.

An auxiliary brake system, referenced generally at 64, is controlled by electronic signals sent from ECU 40. In response to said signals the auxiliary brake system 64 provides an output hydraulic pressure at connector 26. When a trailer 12 is attached to tractor 10, and trailer brake pipe 24 is connected to connector 26, the output hydraulic pressure from auxiliary brake system 64 is conveyed to trailer brakes 62.

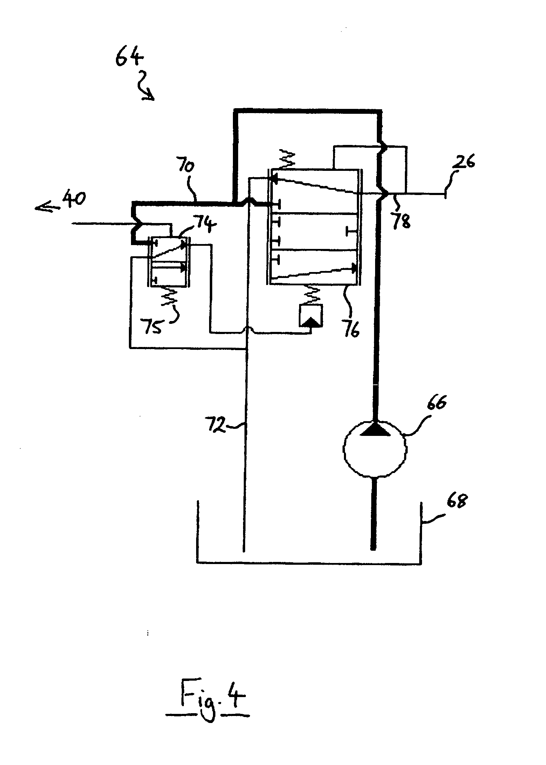

The auxiliary brake system 64 is shown in more detail in Figure 4. A hydraulic pump 66 pumps oil from a hydraulic reservoir 68 so as to provide at its output side a high pressure circuit represented by the bold line 70. The circuit 64 also includes a low pressure line 72 which drains in to reservoir 68.

A two-position directional control valve 74 is actuated by a solenoid (not shown) which is controlled by electronic signals controlled by ECU 40. The directional control valve 74 is biased by spring 75 so as to cause the circuit to default to a "brakes on" position in the absence of a signal from ECU 40.

The output from directional control valve 74 controls the position of a three-position directional control valve 76 which controls the transmission of hydraulic fluid from high pressure line 70 to output 78 and thus connector 26.

Referring once again to Figure 3, it will be appreciated that the auxiliary brake circuit 64 and thus the trailer brakes 62 may be controlled manually by the driver via a separate user interface (not shown) connected to ECU 40. Alternatively, a braking action via brake pedal 46 may cause simultaneous braking of rear wheels 20 and trailer wheels 22 by appropriate control signals sent from ECU 40.

In an alternative mode of operation of control system 60 only the trailer brakes 62 are applied in response to a downshift command when in the engine over speed prevention mode. In this case the tractor brakes 50 are only responsive to dedicated braking actions via brake pedal 46.

Although the above described embodiments are applied to a tractor and trailer combination it is envisaged that the control system described can be implemented in other vehicles such as cars hauling caravans, heavy goods vehicles and other utility vehicles without deviating from the scope of the invention. Also, the wheels of a semi-mounted implement may be braked in accordance with the invention.

It will be appreciated that the inventive control system can operate on vehicles which are not towing trailers. For example a tractor having a heavy implement mounted on rear three-point linkage may suffer from engine overspeed when descending steep inclines. In this case any command in downshift ratio when in the engine over speed prevention mode can result in a brake application of the vehicle wheels in accordance with the invention.

Although described above in relation to hydraulic brake systems, the invention is equally applicable to air brake systems.

From reading the present disclosure, other modification will be apparent to persons killed in the art. Such modifications may involve other features which are already known in the field of vehicle control systems and component parts therefore and which may be used instead of or in addition to features already described herein.

## Claims

1. A control system (30;60) for a vehicle (10) having electronic gearshift, the system comprising a multi-ratio transmission (34) arranged to deliver power from an engine (32) to driven wheels (20) of the vehicle at a selected input-to-output ratio, engine speed sensing means and a user-interface device (44) operably connected to a controller (40) to upshift and downshift the selected ratio of the transmission in response to commands from a driver, the system being operable in an engine overspeed prevention mode when the engine speed exceeds a predetermined threshold and in which mode a downshift in ratio is prevented and a wheel of the vehicle, and/or attached vehicle, is braked in response to a downshift command from the driver.

2. A control system according to Claim 1, wherein the user interface device is a hand-operable control element (44) which is linearly displaceable away from a central position in two opposing directions.

3. A control system according to Claim 2, wherein the control element is biased towards the central position.

4. A control system according to Claim 2 or 3, when in the engine overspeed prevention mode said wheel is braked with a force which is proportional to the displacement of the control element away from the central position.

5. A control system according to any preceding claim, wherein the engine overspeed prevention mode is cancelled when the engine speed falls below a predetermined value.

6. A vehicle comprising the control system of any preceding claim.

7. A vehicle according to Claim 6, comprising a brake system (48) which applies a braking force to braked wheels (20) of the vehicle in response to the depression of a brake pedal (46) by the driver, the brake system comprising a directional control valve which controls the transmission of pressurised fluid to braking apparatus and is controlled by the controller.

8. A vehicle according to Claim 7. wherein the directional control valve is solenoid actuated and wherein the controller controls the directional control valve with electronic signals.

9. A vehicle according to Claim 6, 7 or 8, comprising an auxiliary brake circuit (64) having a connector (26) for connecting to a trailer brake pipe (24) which conveys pressurised fluid to trailer brake apparatus of an attached trailer (12), the auxiliary brake circuit being controllable by the controller (40).

10. A vehicle according to Claim 9, wherein the auxiliary brake circuit comprises a directional control valve (74) which controls the transmission of pressurised fluid to the trailer brake apparatus.

11. A vehicle according to Claim 9 or 10, wherein the driver can manually control the auxiliary brake circuit.

12. A vehicle according to any one of Claims 7 to 11, wherein the pressurised fluid is oil.

13. A tractor according to any one of Claims 6 to 12.

14. A tractor according to Claim 13, wherein the transmission is a continuously variable transmission.

15. A tractor according to Claim 13, wherein the transmission is a powershift transmission operable at a plurality of discrete ratios.

## Patentansprüche

1. Steuer- oder Regelsystem (30; 60) für ein Fahrzeug (10) mit einer elektronischen Getriebeschaltung, wobei das System ein Getriebe (34) mit mehreren Übersetzungen aufweist, welches geeignet ausgebildet ist, um mit einem ausgewählten Übersetzungsverhältnis zwischen einem Eingang und einem Ausgang Leistung von einem Motor (32) zu angetriebenen Rädern (20) des Fahrzeugs zu übertragen oder zu liefern, mit einem die Geschwindigkeit des Motors sensierenden Organ und einer Benutzer-Interface-Einrichtung (44), die betrieblich mit einem Controller (40) verbunden ist zum Hochschalten und Herunterschalten des gewählten Übersetzungsverhältnisses des Getriebes in Abhängigkeit von Befehlen oder Vorgaben eines Fahrers, wobei das System in einem Modus zur Vermeidung einer zu hohen Geschwindigkeit des Motors betreibbar ist, wenn die Geschwindigkeit des Motors einen vorbestimmten Schwellwert überschreitet, wobei in diesem Modus ein Herunterschalten des Übersetzungsverhältnisses vermieden ist und ein Rad des Fahrzeugs und/oder ein befestigtes oder ein angehängtes Fahrzeug in Abhängigkeit von einem Befehl des Fahrers zum Herunterschalten abgebremst wird.

2. Steuer- oder Regelsystem nach Anspruch 1, wobei die Benutzer-Interface-Einrichtung ein handbetätigbares Steuer- oder Regelelement (44) ist, welches linear aus einer zentralen Position in zwei entgegengesetzte Richtungen verlagerbar ist.

3. Steuer- oder Regelsystem nach Anspruch 2, **dadurch gekennzeichnet, dass** das Steuer-oder Regelelement in Richtung der zentralen Position beaufschlagt ist.

4. Steuer- oder Regelsystem nach Anspruch 2 oder 3, wobei in dem Modus zur Vermeidung einer zu hohen Geschwindigkeit des Motors das Rad mit einer Kraft gebremst wird, die proportional zu der Verlagerung des Steuer-oder Regelelements aus der zentralen Position ist.

5. Steuer- oder Regelsystem nach einem der vorhergehenden Ansprüche, **dadurch gekennzeichnet, dass** der Modus zur Vermeidung einer zu hohen Geschwindigkeit des Motors aufgehoben wird wenn die Geschwindigkeit des Motors unter einen vorbestimmten Wert fällt.

6. Fahrzeug mit dem Steuer- oder Regelsystem nach einem der vorhergehenden Ansprüche.

7. Fahrzeug nach Anspruch 6, mit einem Bremssystem (48), welches eine Bremskraft auf gebremste Räder (20) des Fahrzeugs in Abhängigkeit von dem Herunterdrücken eines Bremspedals (46) durch den Fahrer aufbringt, wobei das Bremssystem ein direktionales Steuer-oder Regelventil oder gesteuertes oder geregeltes Wegeventil aufweist, welches die Übertragung von druckbeaufschlagtern Fluid zu einer Bremseinrichtung oder dem Bremssystem steuert oder regelt und durch den Controller gesteuert oder geregelt wird.

8. Fahrzeug nach Anspruch 7, **dadurch gekennzeichnet, dass** das direktionale Steuer- oder Regelventil oder das gesteuerte oder geregelte Wegeventil elektromagnetisch betätigt ist, wobei der Controller das direktional Steuer- oder Regelventil oder das gesteuerte oder geregelte Wegeventil mit elektronischen Signalen steuert oder regelt.

9. Fahrzeug nach Anspruch 6, 7 oder 8, mit einem Hilfsbremskreis (64) mit einem Verbindungsorgan (26) zum Verbinden mit einer Anhängerbremsleitung (24), die druckbeaufschlagtes Fluid an eine Anhängerbremseinrichtung eines befestigten oder angehängten Anhängers (12) liefert oder überträgt, wobei der Hilfsbremskreis durch den Controller (40) steuer- oder regelbar ist.

10. Fahrzeug nach Anspruch 9, wobei der Hilfsbremskreis ein direktionales Steuer- oder Regelventil (74) oder gesteuertes oder geregeltes Wegeventil aufweist, welches die Übertragung von druckbeaufschlagtem Fluid zu der Anhängerbremseinrichtung steuert oder regelt.

11. Fahrzeug nach Anspruch 9 oder 10, **dadurch gekennzeichnet, dass** der Fahrer manuell den Hilfsbremskreis steuern oder regeln kann.

12. Fahrzeug nach einem der Ansprüche 7 bis 11, dadurch gekenntzeichnet, dass das druckbeaufschlagte Fluid Öl ist.

13. Zugfahrzeug oder Traktor nach einem der Ansprüche 6 bis 12.

14. Zugfahrzeug oder Traktor nach Anspruch 13, **dadurch gekennzeichnet, dass** das Getriebe ein CVT-Getriebe oder stufenlos veränderbares Getriebe ist.

15. Zugfahrzeug oder Traktor nach Anspruch 13, **dadurch gekennzeichnet, dass** das Getriebe ein unter Last schaltbares Getriebe ist, welches mit mehreren diskrete Übersetzungsverhältnissen betreibbar ist.

## Revendications

1. Dispositif de commande (30 ; 60) pour un véhicule (10) comportant une boîte de vitesse électronique, le dispositif comprenant une transmission à rapport multiple (34) agencée de manière à délivrer de l'énergie à partir d'un moteur (32) aux roues motrices (20) du véhicule avec un rapport d'entrée sur sortie sélectionné, un moyen de détection de régime de moteur et un dispositif d'interface d'utilisateur (44) couplé de manière opérationnelle à une unité de commande (40) afin d'augmenter et de diminuer le rapport sélectionné de la transmission en réponse aux commandes d'un conducteur, le dispositif pouvant être utilisé dans un mode de prévention de sur-régime de moteur lorsque le régime de moteur excède un seuil prédéterminé, et dans ce mode, une rétrogradation du rapport est empêchée et une roue du véhicule, et/ou du véhicule attelé, est freinée en réponse à une commande de rétrogradation du conducteur.

2. Dispositif de commande selon la revendication 1, dans lequel le dispositif d'interface d'utilisateur est un élément de commande activé à la main (44) qui peut être écarté linéairement à partir d'une position centrale dans deux directions opposées.

3. Dispositif de commande selon la revendication 2, dans lequel l'élément de commande est rappelé vers la position centrale.

4. Dispositif de commande selon la revendication 2 ou 3, lorsqu'il est dans le mode de prévention de sur-régime de moteur, ladite roue est freinée avec un effort qui est proportionnel à l'écart de déplacement de l'élément de commande par rapport à la position centrale.

5. Dispositif de commande selon l'une quelconque des revendications précédentes, dans lequel le mode de prévention de sur-régime de moteur est désactivé lorsque le régime de moteur devient inférieur à une valeur prédéterminée.

6. Véhicule comprenant le dispositif de commande selon l'une quelconque des revendications précédentes.

7. Véhicule selon la revendication 6, comprenant un système de freinage (48) qui applique un effort de freinage sur des roues freinées (20) du véhicule en réponse à la pression par le conducteur sur une pédale de frein (46), le système de freinage comprenant une vanne de commande directionnelle qui commande la transmission de fluide pressurisé au dispositif de freinage et est commandée par l'unité de commande.

8. Véhicule selon la revendication 7, dans lequel la vanne de commande directionnelle est activée par un solénoïde et dans lequel l'unité de commande assure la commande de la vanne de commande directionnelle avec des signaux électroniques.

9. Véhicule selon la revendication 6, 7 ou 8, comprenant un circuit de frein auxiliaire (64) comportant un raccord (26) destiné à être raccordé à une tuyauterie de frein de remorque (24) qui transfère un fluide pressurisé vers le dispositif de frein de remorque d'une remorque (12) attelée, le circuit de frein auxiliaire pouvant être commandé par l'unité de commande (40).

10. Véhicule selon la revendication 9, dans lequel le circuit de frein auxiliaire comprend une vanne de commande directionnelle (74) qui commande la transmission du fluide pressurisé vers le dispositif de frein de remorque.

11. Véhicule selon la revendication 9 ou 10, dans lequel le conducteur peut commander manuellement le circuit de frein auxiliaire.

12. Véhicule selon l'une quelconque des revendications 7 à 11, dans lequel le fluide pressurisé est de l'huile.

13. Tracteur selon l'une quelconque des revendications 6 à 12.

14. Tracteur selon la revendication 13, dans lequel la transmission est une transmission variable en continu.

15. Tracteur selon la revendication 13, dans lequel la transmission est une boîte de vitesse pouvant être utilisée sur une pluralité de rapports discrets.
